# EUROPEAN PATENT SPECIFICATION

(11) **EP 0 378 042 B1**
(45) Date of publication and mention of the grant of the patent: **11.08.1993**
(21) Application number: 89810003.7
(22) Date of filing: 03.01.1989
(51) Int. Cl.: B23B 31/26

(54) **Device for making a mechanical element integral in rotationalmovement with a second external, coaxial element by friction**
Vorrichtung zum Zusammensetzen eines mechanischen Elementes in einer Rotationsbewegung mit einem zweiten koaxialen äusseren Element durch Reibung
Dispositif pour rendre un élément mécanique solidaire dans le mouvement rotatif avec un second élément extérieur, coaxial par friction

(30) Priority: 20.12.1988 CH 4685/88
(43) Date of publication of application: 18.07.1990
(73) Proprietor: Baldaccini, Mario, 6982 Agno (CH)
(72) Inventor: Mantovani, Elis, CH-6932 Breganzona (CH)
(74) Representative: Baggiolini, Raimondo

(56) References cited:
- DE-C- 952 673
- US-A- 3 851 977

## Description

The invention concerns the field of the systems for blocking two coaxial rotating parts in any kind of machines by means of the traction exerted between the coupling of portions threaded with different pitches.

The state of the art comprises some cases of said blocking-systems: a basic example is supplied by patent no. DE-C-952-673. In this case, like in the rest of the other known systems, the cited traction involves only threaded portions created on the two parts to be fixed, therefore affecting and influencing the project-dimensioning of such parts. Different is the solution provided by the present invention, wherein other independent parts are introduced, which cause the said required traction. These parts, as well as the relating advantages, will be explained in the following description.

To owercome such such disadvantages, the object of the invention is a combination of a first mechanical element, a second mechanical element, and a device for locking the first mechanical element against relative rotation in the second element being external and coaxial to the first element by friction which is generated between two friction zones of the two elements as a result of an axial traction exerted on the first element, comprising a hollow cylindrical bushing threaded on its inner surface with pitch m, characterized in that the bushing is wedges in an inside cylindrical cavity of the second element, that threading stud pins are arranged to rotate tangentially to the threads of the bushing and to adhere by friction due to a deliberate interference between the diameters of their threading with that of bushing, said stud pins being threaded with pitch m, being supported at their ends by outside rings of a cylindrical housing and being free to rotate around their own axes as a result of the movement imparted to them, also by friction from the interference between the threadings, by the rotation of a shaft, which is also threaded with pitch m, that the shaft has the axis of rotation coincident with that of cylindrical housing, and carries a threaded end with pitch n greater than pitch m that screws into a threaded hole of the first element so that, by the effect of the rotation of shaft, during its screwing into hole, there are caused an axial approaching movement of the first element against the second element and a rotation in the opposite direction of threaded pins around their own axes, whereby the pins, engaging by friction of their own threads on the threading of bushing, translate, together with housing, along the direction of the longitudinal axis of inside element, until, friction surfaces of the two elements having come in contact, a further rotation of shaft in the screwing direction, by the resulting rotation of threaded pins, causes, by the effect of the difference between pitches m and n of the different threading, and axial traction of deliberate intensity on the first element and consequently a desired contact pressure between friction surfaces and the resulting locking of the two elements.

The usefulness and reliability of the device become evident if, for clearness of explanation, a particular case of application of it is considered, i.e., for example, that in which one of the two mechanical elements to be locked is a machine tool arbor, to which is to be transmitted without slipping and vibrations the movement supplied by a cylindrical element, external and coaxial to it, for example, the rotating hollow shaft of an electric motor, or of another type.

For said fastening, locking systems now in use adopt clamps that hold the arbor by engaging around its suitably shaped shank. The traction necessary to provide the desired pressure to the two friction surfaces, respectively, of the arbor and drive shaft, is provided by exerting, by systems of springs or the equivalent, the traction force sufficient to generate the friction necessary for transmission of the movement.

These systems exhibit two main limitations of their functionality and reliability: in the first place, since dimensionally excessive or bulky structures cannot be constructed by spring or equivalent means, the traction force that can be exerted is limited, and not always such as to assure a perfect rigidity of transmission of the movement, i.e., without relative slipping or vibrations. In the second place, also for dimensional reasons, the shaped part gripped by the clamps necessarily exhibits a narrowing of the section which many times triggers fatigue breaking phenomena as a result of the torsional-bending stresses to which the arbor is subjected during its work and during the sudden insertion operations caused by automatic coupling elements.

The device, object of the invention, solves both the problems, set forth above, as will be explained below.

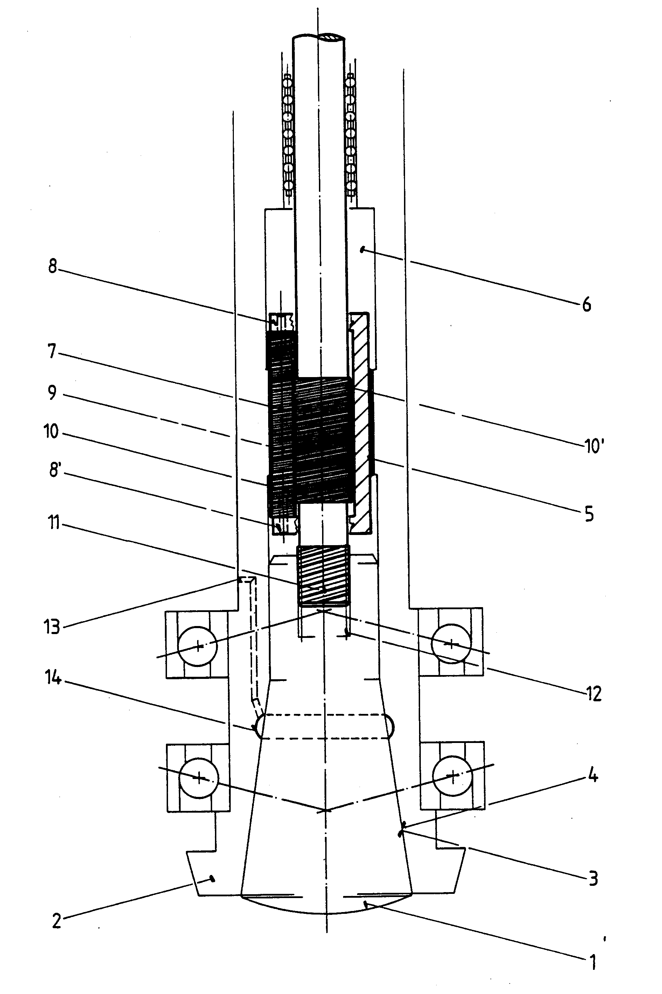

Figure 1 represents a view in longitudinal section of an arbor-shaft motor-locking device unit.

Arbor 1 and rotating shaft 2 remain integral during rotation by the friction that is generated between their respective friction surfaces 3, 4. This friction is generated by the traction that is exerted on arbor 1 as follows:
A threaded blind hole 12 with threading of pitch n is made in the end part of the arbor. In this hole is screwed threaded end 11 of arbor 10', an arbor which also carries on its surface a threaded portion 10 with threading of pitch m. Threaded pins engage in this threading by rotating around their own axes by the friction generated by a deliberate interference between the diameters of their threadings with that of shaft 10; they are threaded pins 7, also with pitch m, variable in number depending on the dimensional requirements, supported at the ends of end rings 8, 8' of a cylindrical housing 9 but free to rotate around their own axes.

During the operation of screwing of threaded end 11 of shaft 10 in threaded hole 12 of the arbor, these threaded pins 7 therefore rotate in the direction opposite to that of shaft 10 inside bushing 5, wedged in inside cavity 2'of the drive shaft and also threaded with the same pitch m as pins 7, of shaft 10. The rotation of threaded pins 7, relative to threaded bushing 5, causes the translation of housing 9 and of the pins integral with it in the direction parallel to the longitudinal axis.

At the moment which the two friction surfaces 3, 4 come in contact, a further rotation in screwing of shaft 10, by the effect of the further movement of the bushing and of the difference between pitches m and n of the threadings, causes locking of arbor 1 to hollow shaft 2' of the motor.

Because of the small angle of inclination of the spiral of the threading, which is much less than the friction angle of the material, this locking is irreversible, unless a suitable countermaneuver of unscrewing and unlocking is performed.

The traction force exerted in locking is distributed over all the numerous points of contact between the threads of pins 7 and of bushing 5 and therefore can be very high, in practice a function only of the resistance to traction of the diametral section of shaft 10.

It can be noted that the locking forces affect a limited, concentrated portion of the hollow shaft of the motor, without imparting stresses to the other elements.

With the locking device considered by the invention it is also very easy to avoid the serious risk of violent expulsion, with the motor in movement, of the arbor, in case of an accidental loosening of the locking.

With a simple annular cavity 14 made in friction surface 4 of drive shaft 2 connected to sensors 13, for example pneumatic, of desired sensitivity, with the slightest clearance being created between the two friction surfaces 3, 4, it is easy to order immediately by said sensors the stopping of the motor, certainly before a complete unscrewing of end 11 of shaft 10 from hole 12 of the arbor shank occurs.

It is obvious that the system of locking between two mechanical elements which can be obtained with the device of the invention can be extended to any type of other pertinent application and, therefore, the figure represents only a particular example, without in any way being binding or limiting of the possibilities of use of the device under consideration.

Final note: the clockwise and counterclockwise directions of the various threadings have not been indicated, since their selection is free depending on requirements, if the correct kinematic functioning of the entire device remains unchanged.

## Claims

1. Combination of a first mechanical element (1), a second mechanical element (2), and a device for locking the first mechanical element (1) against relative rotation in the second element (2) being external and coaxial to the first element by friction which is generated between two friction zone (3, 4) of the two elements as a result of an axial traction exerted on the first element (1), comprising a hollow cylindrical bushing (5) threaded on its inner surface with pitch m, characterized in that the bushing (5) is wedged in an inside cylindrical cavity (6) of the second element (2), that threading stud pins (7) are arranged to rotate tangentially to the threads of the bushing and to adhere by friction due to a deliberate interference between the diameters of their threading with that of bushing (5), said stud pins being threaded with pitch m, being supported at their ends by outside rings (8) of a cylindrical housing (9) and being free to rotate around their own axes as a result of the movement imparted to them, also by friction from the interference between the threadings, by the rotation of a shaft (10), which is also threaded with pitch m, that the shaft (10) has the axis of rotation coincident with that of cylindrical housing (9), and carries a threaded end (11) with pitch n greated than pitch m that screws into a threaded hole (12) of the first element (1) so that, by the effect of the rotation of shaft (10), during its screwing into hole (12), there are caused an axial approaching movement of the first element (1) against the second element (2) and a rotation in the opposite direction of threaded pins (7) around their own axes, whereby the pins, engaging by friction of their own threads on the threading of bushing (5), translate, together with housing (9), along the direction of the longitudinal axis of inside element (2), until, friction surfaces (3, 4) of the two elements having come in contact, a further rotation of shaft (10) in the screwing direction, by the resulting rotation of threaded pins (7, 7'), causes, by the effect of the difference between pitches m and n of the different threading, and axial traction of deliberate intensity on the first element (1) and consequently a desired contact pressure between friction surfaces (3, 4) and the resulting locking of the two elements.

2. Device according to claim 1, characterized by a system of one or more sensors (13) which, noting the condition of imperfect approach between the two friction surfaces (3, 4) of the two mechanical elements (1, 2) immediately switch off the drive apparatus connected to the mechanical elements in rotation, causing their stopping.

3. Device according to claims 1 and 2 applied to a machine tool arbor which receives the movement of the hollow shaft of a motor that is electric or of another nature.

## Patentansprüche

1. Kombination aus einem ersten mechanischen Element (1), einem zweiten mechanischen Element (2) sowie einer Vorrichtung zum Blockieren des ersten mechanischen Elements (1) gegen eine Relativdrehung im zweiten Element (2), das sich außenseitig des ersten Elements und koaxial zu diesem befindet, durch Reibung, die zwischen zwei Reibungsbereichen (3, 4) der beiden Elemente als ein Ergebnis einer axialen, auf das erste, eine hohlzylindrische Buchse (5), die an ihrer Innenfläche ein Gewinde mit einer Teilung m hat, besitzende Element (1) ausgeübten Zugkraft erzeugt wird, dadurch gekennzeichnet, daß die Buchse (5) in einem inneren zylindrischen Hohlraum (6) des zweiten Elements (2) festgeklemmt wird, daß Gewinde-Stiftbolzen (7) angeordnet sind, um tangential zu den Gewinden der Buchse zu drehen sowie durch Reibung aufgrund eines beabsichtigten Eingriffs zwischen den Durchmessern ihres Gewindes mit denjenigen der Buchse (5) zusammenzuhalten, wobei diese Stiftbolzen ein Gewinde mit einer Steigung m haben, an ihren Enden durch äußere Ringe (8) eines zylindrischen Gehäuses (9) gelagert und für ein Drehen um ihre eigenen Achsen herum als ein Ergebnis der ihnen auch durch Reibung aus dem Eingriff zwischen den Gewinden durch die Drehung einer ebenfalls mit einem Gewinde mit der Steigung m versehenen Welle (10) vermittelten Bewegung frei sind, daß die Drehachse der Welle (10) mit der Achse des zylindrischen Gehäuses (9) zusammenfällt und die Welle einen Gewinde-Endabschnitt (11) mit einer gegenüber der Teilung m größeren Teilung n hat, welcher in eine Gewindebohrung (12) des ersten Elements (1) einschraubt, so daß durch die Wirkung der Drehung der Welle (10) während ihres Einschraubens in die Bohrung (12) eine axiale Annäherungsbewegung des ersten Elements (1) gegen das zweite Element (2) sowie ein Drehen der Gewindebolzen (7) in der entgegengesetzten Richtung um ihre eigenen Achsen hervorgerufen wird, wodurch die durch Reibung ihrer eigenen Gewinde am Gewinde der Buchse (5) eingreifenden Bolzen zusammen mit dem Gehäuse (9) eine translatorische Bewegung längs der Richtung der Längsachse des inneren Elements (2) ausführen, bis, nachdem die Reibungsflächen (3, 4) der beiden Elemente in Anlage gekommen sind, ein weiteres Drehen der Welle (10) in der Einschraubrichtung durch das resultierende Drehen der Gewindebolzen (7, 7') mittels der Wirkung des Unterschiedes zwischen den Teilungen m und n der verschiedenartigen Gewinde eine axiale Zugkraft von wohlerwogener Intensität am ersten Element (1) und demzufolge einen gewünschten Anlagedruck zwischen den Reibungsflächen (3, 4) sowie das resultierende Blockieren der zwei Elemente hervorruft.

2. Vorrichtung nach Anspruch 1, gekennzeichnet durch ein System von einem oder mehreren Fühlern (13), die bei Feststellen des Zustandes einer mangelhaften Annäherung zwischen den zwei Reibungsflächen (3, 4) der zwei mechanischen Elemente (1, 2) sofort die mit den mechanischen, im Drehen befindlichen Elementen gekoppelte Antriebsvorrichtung abschalten, um deren Stillsetzen zu bewirken.

3. Vorrichtung nach Anspruch 1 und 2 in Anwendung auf eine Werkzeugmaschinenspindel, die die Bewegung einer Hohlwelle eines Motors von elektrischer oder von anderer Art empfängt.

## Revendications

1. Combinaison d'un premier élément mécanique (1), d'un second élément mécanique (2) et d'un dispositif pour immobiliser le premier élément mécanique (1) contre un mouvement relatif de rotation à l'intérieur du second élément (2), celui-ci étant extérieur et coaxial au premier élément, par une friction se produisant entre deux zones de friction (3,4) des deux éléments et résultant d'une traction axiale exercée sur le premier élément (1), le dispositif comprenant une douille cylindrique creuse (5) qui présente sur sa surface intérieure un filetage de pas m, caractérisée en ce que la douille (5) est calée dans une cavité interne cylindrique (6) du second élément (2), en ce que des goujons de filetage (7) sont disposés de façon à tourner tangentiellement aux filets de la douille et pour y adhérer par friction en raison d'une interférence voulue entre les diamètres de leur filetage et de celui de la douille (5), lesdits goujons étant filetés avec un pas m, étant supportés à leurs extrémités par des anneaux extérieurs (8) appartenant à un logement cylindrique (9) et étant libres de tourner autour de leurs propres axes en résultat du mouvement qui leur a été imparti, également par friction à partir de l'interférence se produisant entre les filetages, par la rotation d'un arbre (10) également pourvu d'un filetage de pas m, par le fait que l'arbre (10) a son axe de rotation qui coïncide avec celui du logement cylindrique (9) et présente une extrémité filetée (11) de pas n supérieur au pas m qui se visse dans un trou taraudé (12) du premier élément (1) de sorte que sous l'effet de la rotation de l'arbre (10), lors de son vissage dans le trou (12), se produisent un mouvement axial de rapprochement du premier élément (1) vers le second élément (2) et une rotation en direction opposée des goujons (7) autour de leurs propres axes, de sorte que les goujons, engageant par friction de leur propre filetage le filetage de la douille (5), se deplacent en même temps que le logement (9) le long de l'axe longitudinal de l'élément intérieur (2) jusqu'à ce que, les surfaces de friction (3,4) des deux éléments étant venues en contact, une rotation supplémentaire de l'arbre (10) dans la direction du vissage, par la rotation qui en résulte des goujons (7,7'), provoque, par l'effet de la différence entre les pas de filetage m et n, une traction axiale d'intensité voulue sur le premier élément (1) et, en conséquence, une pression de contact désirée entre les surfaces de friction (3,4) et le verrouillage résultant des deux éléments.

2. Dispositif selon la revendication 1, caractérisé par un système d'un ou de plusieurs capteurs (13) qui, lorsqu'ils notent l'état d'approche imparfaite entre les deux surfaces de friction (3,4) des deux éléments mécaniques (1,2), coupent immédiatement l'appareil d'entraînement relié aux éléments mécaniques en rotation, en provoquant l'arrêt de ceux-ci.

3. Dispositif selon les revendications 1 et 2, appliqué à un arbre de machine-outil recevant le mouvement de l'arbre creux d'un moteur éléctrique ou d'une autre nature.
